(19) Europäisches Patentamt
European Patent Office
Office européen des brevets

(11) **EP 4 198 286 A2**

(12) **EUROPEAN PATENT APPLICATION**

(43) Date of publication:
**21.06.2023 Bulletin 2023/25**

(21) Application number: **22208025.1**

(22) Date of filing: **17.11.2022**

(51) International Patent Classification (IPC):
**F02C 7/262** *(2006.01)*    **F02K 5/00** *(2006.01)*

(52) Cooperative Patent Classification (CPC):
**F02C 7/262; F02K 5/00;** F01D 15/00; F02C 6/14;
F05D 2220/76

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2021 GB 202118044**

(71) Applicant: **Rolls-Royce plc**
**London N1 9FX (GB)**

(72) Inventors:
• **Moore, Gareth**
**Derby, DE24 8BJ (GB)**

• **Davies, Paul**
**Derby, DE24 8BJ (GB)**
• **Husband, Stephen**
**Derby, DE24 8BJ (GB)**
• **Trainer, David**
**Derby, DE24 8BJ (GB)**
• **Scothern, David**
**Derby, DE24 8BJ (GB)**
• **George, Luke**
**Derby, DE24 8BJ (GB)**
• **Herbert, Douglas**
**Derby, DE24 8BJ (GB)**

(74) Representative: **Rolls-Royce plc**
**Intellectual Property Dept SinA-48**
**PO Box 31**
**Derby DE24 8BJ (GB)**

(54) **RESTARTING A GAS TURBINE ENGINE**

(57)     Aircraft power and propulsion systems 100, aircraft 1 comprising such power and propulsion systems 100, and methods of restarting a gas turbine engine 110 of such power and propulsion systems 100 during flight are provided. One such aircraft power and propulsion system 100 comprises: a propulsive gas turbine engine 110 comprising a plurality of spools 14, 19, 26; 15, 17, 27, combustion equipment 16, one or more electric machines 111, 112 mechanically coupled with one or more of the spools 14, 19, 26; 15, 17, 27, and an electrically-powered fuel pump 115 for delivering fuel to the combustion equipment 16; an electrical system 120 connected with the one or more electric machines 111, 112 and the electrically-powered fuel pump 115, the electrical system comprising an energy storage system 130; and a control system 140 configured to: responsive to a determination to the effect that a flame in the combustion equipment 16 has been extinguished, control the electrical system 120 to supply electrical power from the energy storage system 130 to the fuel pump 115 during an engine restart attempt.

FIG. 4

EP 4 198 286 A2

## Description

### TECHNICAL FIELD

This disclosure concerns systems and methods for restarting a propulsive gas turbine engine of an aircraft during flight, and particularly, but not exclusively, to restarting the propulsive gas turbine engine of a single-engine aircraft.

### BACKGROUND

In aerospace, there is a trend towards aircraft and their gas turbine engines becoming 'more electric' in their design. For example, aircraft and engine systems and accessories which have previously been mechanically, pneumatically or hydraulically powered may be replaced with electrically powered equivalents. Spool-coupled electric machines may be utilized to increase the power generation capability to meet the increased electrical power demand. Spool-coupled electric machines may also be used to accelerate or decelerate the spools of the engines to improve engine operability, for example to improve engine surge margin and reduce fuel consumption. Hybrid electric aircraft similarly utilize a large amount of electrical power to power propulsive and non-propulsive electrical loads.

Whilst there have been some investigations into more electric engine and aircraft architectures, and to control approaches for improving engine operability, less attention has been paid to auxiliary functions. Furthermore, there has been little in the way of investigation specific to single-engine more electric aircraft.

### SUMMARY

According to a first aspect, there is provided an aircraft power and propulsion system comprising: a propulsive gas turbine engine comprising a plurality of spools, combustion equipment, one or more electric machines mechanically coupled with one or more of the spools, and an electrically-powered fuel pump for delivering fuel to the combustion equipment; an electrical system connected with the one or more electric machines and the electrically-powered fuel pump, the electrical system comprising an energy storage system; and a control system configured to: responsive to a determination to the effect that a flame in the combustion equipment has been extinguished, control the electrical system to supply electrical power from the energy storage system to the fuel pump during an engine restart attempt.

Utilizing an electrically-powered fuel pump, rather than a conventional fuel pump powered mechanically through a mechanical offtake from one or more of the engine spools, may provide one or more advantages. These may include, for example: a reduction in mechanical losses; reduced fuel consumption; a reduction in the size or even the total removal of the engine accessory gearbox, which takes up space around the engine core; improved control of fuel pressurization, combustor fuel-to-air ratio and the like; and generally improved engine performance. However, an electrically-powered fuel pump may leave the aircraft vulnerable following an unexpected engine shutdown, especially if the aircraft has only a single engine. By providing energy storage to power the fuel pump, not only is the vulnerability reduced, it is done without the requirement for a back-up system such as a Ram Air Turbine (RAT) or Auxiliary Power Unit (APU). Furthermore, provided the electric fuel pump has the power to operate during the restart procedure, its use may actually improve the envelope in which engine restart is possible due to improvements in terms of management of fuel pressure, fuel-to-air ratio in the combustor, and spool windmill speed (and thus core pressure ratio) since the fuel pump's operation does not remove mechanical energy from a spool of the unlit engine through an accessory gearbox.

The energy storage system may take the form of one or more batteries and/or one or more supercapacitors. It is also contemplated that fuel cells may be used. However, batteries and/or supercapacitors may be preferred to fuel cells because fuel cells, as well not being re-chargeable during flight, generally require or benefit from a level of ambient pressure not available at high altitude. If, however, the aircraft is deployed for lower-altitude flight or the fuel cell can be provided in a suitably pressurized environment, fuel cells could be used.

The energy storage system may also be used for a variety of purposes unrelated to engine restarts, for example to improve engine operability and/or peak turbine temperatures during normal use (e.g. by delivering power to or absorbing power from one or more spool-coupled electric machines during transients). To ensure power is always available for an engine restart attempt, a portion of the energy storage system may be dedicated to providing power to one or more electrical loads, including the electrically-powered fuel pump, during engine restart attempts. For example, a specific energy storage device, such as one or more battery cells or modules of a larger overall number of cells or modules of the energy storage system, may be dedicated to this purpose. The control system may be configured so that this dedicated portion of the energy storage is used for no purpose other than providing electrical power to the fuel pump, and possibly other electrical loads used in the restart process such as actuators, during restart attempts.

Additionally or alternatively, the control system may be further configured to maintain a state of charge of the energy storage system above a predetermined level, wherein the predetermined level is sufficient for the energy storage system to power the electrically powered fuel pump for at least one engine restart attempt. This way there is sufficient power for a restart attempt even if no dedicated energy storage device is provided.

The control system may be further configured, responsive to the determination to the effect that the flame in the combustion equipment of the gas turbine engine has been extinguished, to control the electrical system to: supply electrical power from the energy storage system to one or more of the electric machines and to operate said one or more of the electric machines as motors to drive rotation of and increase a speed of one or more of the spools of the gas turbine engine during the restart attempt. The use of electric machines may improve the engine restart envelope and/or reduce or prevent the need to perform manoeuvres, for example a dive to gain speed and increase air pressure, prior to a restart attempt.

The control system may be further configured to maintain a state of charge of the energy storage system above a predetermined level, wherein the predetermined level is sufficient to power both the electrically powered fuel pump and the electric machines operated as motors for at least one engine restart attempt. In this way the likelihood of a successful restart is increased because the envelope for restart is increased.

The predetermined level may be sufficient for a plurality of engine restart attempts (e.g. two engine restart attempts).

The control system may be further configured, responsive to the determination to the effect that the flame in the combustion equipment of the gas turbine engine has been extinguished, to: prior to the engine restart attempt, operate one or more of the electric machines as generators to extract mechanical power and generate electrical power from one or more of the spools, and to deliver at least a portion of the generated electrical power to charge the energy storage system and/or to power one or more electrical loads. Such an approach may help ensure there is sufficient electrical power to power the electric fuel pump during the upcoming restart attempt.

The propulsive gas turbine engine may comprise a first spool and a second spool. In some embodiments, the first spool is a low pressure (LP) spool and the second spool is a high pressure (HP) spool. The propulsive gas turbine engine may further comprise a fan mechanically coupled with and driven by the first (LP) spool, possibly via reduction gearbox whereby the fan rotates at a lower speed than the first (LP) spool. In other examples the engine is a three-spool engine with a HP spool, an intermediate pressure (IP) spool and an LP spool driving a fan. In this case the second spool may be the HP spool and the first spool may the IP spool.

The electrical system may comprise one or more electric machines mechanically coupled with its first spool and one or more electric machines mechanically coupled with its second spool. In this way, electrical power can be generated from both spools simultaneously. This may provide a number of advantages in terms of engine operability, for example the ability to charge the energy storage system relatively rapidly with a reduced impact on engine surge margin. The ability to motor both spools simultaneously may also further increase the engine restart envelope.

One or more and optionally all of the electric machines may be embedded with a core of the propulsive gas turbine engine. Embedding the machines within the core may allow for a further reduction in losses, and allow for a reduction in the size or complete omission of the accessory gearbox.

The propulsive gas turbine engine may be any suitable type, for example of the ducted fan type (e.g. a turbofan) or the unducted, open rotor, type.

A ratio, Pi/T, equal to the maximum electrical power generation rating of the first electric machine divided by the maximum thrust rating of the gas turbine engine, may be greater than or equal to 2.0 $WN^{-1}$. The thrust rating is a dry thrust rating (i.e. without the use of reheat/afterburner, if such a system is present in the engine). The first spool may be an intermediate pressure (IP) spool of the gas turbine engine. The term "intermediate pressure spool" will be understood to refer to a spool which is neither the highest pressure nor the lowest pressure spool of the engine. In other embodiments, the first spool is a low pressure (LP) spool of the gas turbine engine. The term "low pressure spool" will be understood to refer to the lowest pressure spool of the gas turbine engine. In some embodiments, the LP spool drives a fan via a reduction gearbox so that the fan rotates at a lower speed than the LP spool. The value of the ratio, Pi/T, may be significantly higher than in conventional gas turbine engines.

The value of the ratio, Pi/T, may be greater than 2.5 $WN^{-1}$, greater than 3.0 $WN^{-1}$, or even greater than 3.5 $WN^{-1}$. The value of the ratio, Pi/T, may be less than 7.0 $WN^{-1}$, less than 6.5 $WN^{-1}$, less than 6.0 $WN^{-1}$, or less than 5.5 $WN^{-1}$. The value of the ratio, Pi/T, may be between 2.5 $WN^{-1}$ and 6.0 $WN^{-1}$ or between 3.0 $WN^{-1}$ and 5.5 $WN^{-1}$. In one embodiment the value of the ratio, Pi/T, is between 3.5 $WN^{-1}$ and 5.0 $WN^{-1}$.

A ratio, $P_2/T$, equal to the maximum electrical power generation rating of the second electric machine divided by the maximum thrust rating of the gas turbine engine, may be greater than or equal to 3.5 $WN^{-1}$. The thrust rating is a dry thrust rating (i.e. without the use of reheat/afterburner, if such a system is present in the engine). The second spool may be a high pressure (HP) spool of the gas turbine engine. The term "high pressure spool" will be understood to refer to the highest pressure spool of the engine. The value of the ratio, $P_2/T$, may be significantly higher than in conventional gas turbine engines.

The value of the ratio, $P_2/T$, may be greater than 4.0 $WN^{-1}$, greater than 4.5 $WN^{-1}$, greater than 5.0 $WN^{-1}$ or even greater than 5.5 $WN^{-1}$. The value of the ratio, $P_2/T$, may be less than 10.0 $WN^{-1}$, less than 9.5 $WN^{-1}$, less than 9.0 $WN^{-1}$, or less than 8.5 $WN^{-1}$. The value of the ratio, $P_2/T$, may be between 4.0 $WN^{-1}$ and 9.5 $WN^{-1}$, between 4.5 $WN^{-1}$

and 9.0 WN$^{-1}$, between 5.0 WN$^{-1}$ and 8.5 WN$^{-1}$ or between 5.5 WN$^{-1}$ and 8.0 WN$^{-1}$. In one embodiment the value of the ratio, P$_2$/T, is between 6.0 WN$^{-1}$ and 7.5 WN$^{-1}$. In another embodiment the electric machines of the first and second spool are equally rated, e.g. P1/T and P2/T may have equal or substantially equal values greater than or equal to 2.0 WN$^{-1}$.

A ratio defined as a combined rated power of all of the one or more electrical machines mechanically coupled with the spools of the gas turbine engine divided by the maximum rated thrust of the gas turbine engine may be greater than or equal to 3.5 W/N. The thrust rating is a dry thrust rating (i.e. without the use of reheat/afterburner, if such a system is present in the engine). This may be considerably higher than the equivalent ratio for conventional gas turbine engines. The increased ratio may be achieved by providing electrical machines coupled with both the first spool and the second spool (i.e. dual spool power generation). The higher ratio may, for example, allow rapid charging of the energy storage system and an improved restart envelope.

The ratio may be greater than 3.5 W/N, for example greater than or equal to 4.0 W/N, greater than or equal to 4.5 W/N, greater than or equal to 5.0 W/N, greater than or equal to 5.5 W/N, or even greater than or equal 6.0 W. The ratio may be less than 15.0 W/N. In one group of embodiments, the ratio is between 4.5 W/N and 13 W/N, and is preferably between 5.0 W/N and 12 W/N. In one embodiment, the ratio is between 8.5 W/N and 12 W/N.

The aircraft power and propulsion system may have only one propulsive gas turbine engine. The approach may be particularly advantageous in a single-engine more electric aircraft because such an aircraft may have no or very limited ability to generate electrical power following the loss of the engine, especially if no RAT or other emergency power generation system is available.

However, the approach could be used in a multi-engine aircraft. Thus, the aircraft power and propulsion system may further comprise a second propulsive gas turbine engine comprising a plurality of spools, combustion equipment, one or more electric machines mechanically coupled with one or more of the plurality of spools, and an electrically-powered fuel pump for delivering fuel to the combustion equipment. The electrical system may be connected with the one or more electric machines and the electrically-powered fuel pump of the second engine.

In a multi-engine power and propulsion system, the ratios defined above, and the stated values and ranges, can be applied for each propulsive gas turbine engine of the multi-engine power and propulsion system.

The energy storage system may have a high energy storage capacity relative to the platform power. For example, a ratio defined as: a total energy storage capacity of the electrical energy storage system, divided by a combined maximum rated thrust of the one or more gas turbine engines, may be greater than or equal to 0.1 Watt hours per Newton (WhN$^{-1}$). The ratio may be between 0.15 and 0.50 WhN$^{-1}$. In an embodiment the ratio is between 0.18 and 0.45 WhN$^{-1}$. In one group of embodiments the ratio is between 0.18 and 0.28 WhN$^{-1}$. In another group of embodiments the ratio is between 0.25 and 0.42 WhN$^{-1}$.

According to a second aspect, there is provided an aircraft comprising the aircraft power and propulsion system of the first aspect.

According to a third aspect, the control system of the first aspect is separately provided. The control system may take the form of a controller or one or more controllers, each of which may be implemented in hardware, software of a combination of the two. The control system may comprise one or more functional modules of a wider control system. In some embodiments, the control system is or is part of an Electronic Engine Controller (EEC), Engine Control Unit (ECU) or Full Authority Digital Engine Controller (FADEC).

According to a fourth aspect, there is provided a method of restarting a propulsive gas turbine engine of an aircraft during flight of the aircraft, the method comprising: operating one or more electric machines as generators to extract mechanical power and generate electrical power from one or more spools of the gas turbine engine; supplying the generated electrical power to an electrically-powered fuel pump, the fuel pump supplying fuel to combustion equipment of the gas turbine engine; determining a condition to the effect that a flame in the combustion equipment of the gas turbine has been extinguished; responsive to determining that a flame in the combustion equipment has been extinguished, supplying electrical power from an energy storage system to the electrically-powered fuel pump; and restarting the gas turbine engine whilst powering the electrically-powered fuel pump using electrical power from the energy storage system.

The amount and fraction of the power extracted from the engine spool(s) by the electric machine(s) to power the electric fuel possibly and other electrical loads may be higher than in conventional systems. For example, in some embodiments, prior to the determination of that the flame in the combustion equipment has been extinguished, a peak value of the percentage of the total combined shaft power of the plurality of spools of an engine extracted from the shafts and converted to electrical power may be greater than 5%. In some embodiments, the percentage may even be greater than 7%, 8% or even greater than 10%. Generally, the peak percentage will be less than 20%, and is preferably less than 15%. For example, the peak value may be in the range 7-15%.

The method may further comprise: responsive to determining that a flame in the combustion equipment has been extinguished, prior to restarting the gas turbine engine, operating one or more electric machines as generators to generate electrical power from one or more spools of the gas turbine engine and delivering at least a portion of the generated electrical power to charge the energy storage system and/or to power one or more electrical loads.

The method may further comprise: prior to determining that the flame in the combustion equipment of the gas turbine has been extinguished, maintaining a state of charge of the electrical energy storage system above a predetermined level, wherein the predetermined level is sufficient to power the electrically powered fuel pump for at least one engine restart attempt.

Restarting the gas turbine engine may comprise performing a windmill restart. In other words, the restart attempt may not involve the use of electric machines increase the speed of the one or more spools.

Alternatively, one or more electric machines may be used to assist the restart attempt. Thus, the method may further comprise: responsive to determining that the flame in the combustion equipment has been extinguished, supplying electrical power from the electrical energy storage system to one or more electric machines and operating said one or more of the electric machines as motors to drive rotation of and increase a speed of one or more of the spools of the gas turbine engine during the restart attempt. The predetermined level may be sufficient for a plurality of engine restart attempts.

The method may further comprise: prior to determining that the flame in the combustion equipment of the gas turbine has been extinguished, maintaining a state of charge of the electrical energy storage system above a predetermined level, wherein the predetermined level is sufficient for powering both the electrically powered fuel pump and the electric machines operated as motors for at least one engine restart attempt. The predetermined level may be sufficient for a plurality of engine restart attempts.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

## BRIEF DESCRIPTION OF THE DRAWINGS

Embodiments will now be described by way of example only with reference to the accompanying drawings, which are purely schematic and not to scale, and in which:

**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a schematic illustration of an aircraft with a single-engine power and propulsion system;
**Figure 5** is a schematic illustration of an aircraft with a twin-engine power and propulsion system; and
**Figure 6** is a flow diagram illustrating a method of restarting a propulsive gas turbine engine of an aircraft.

## Detailed Description

### *Figure 1*

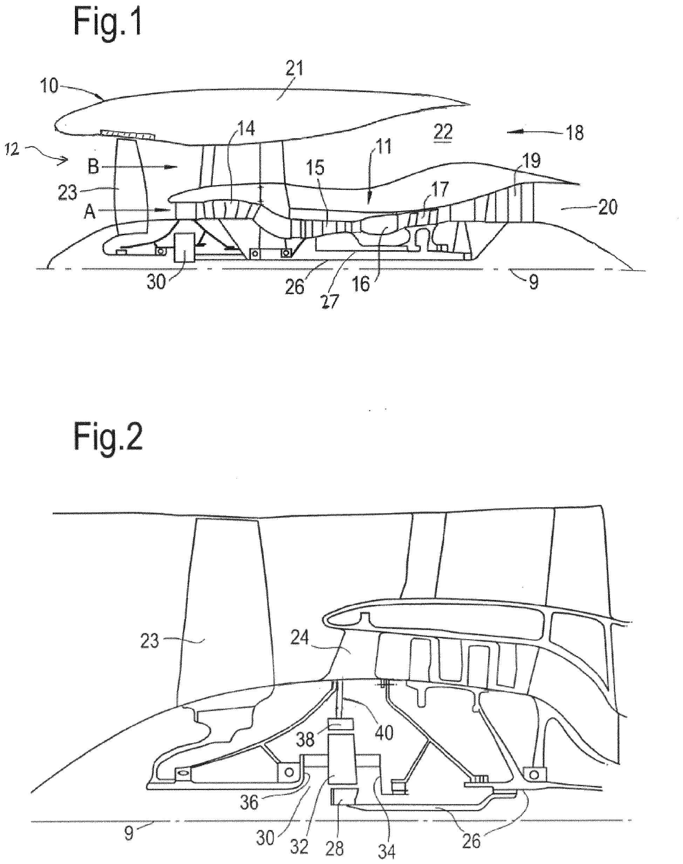

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

It will be understood that the low-pressure compressor 14, the low-pressure turbine 19 and the interconnecting shaft 26 together form the low-pressure spool. Similarly, the high-pressure compressor 15, the high-pressure turbine 17 and the interconnecting shaft 27 together form the high-pressure spool.

*Figure 2*

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

*Figure 3*

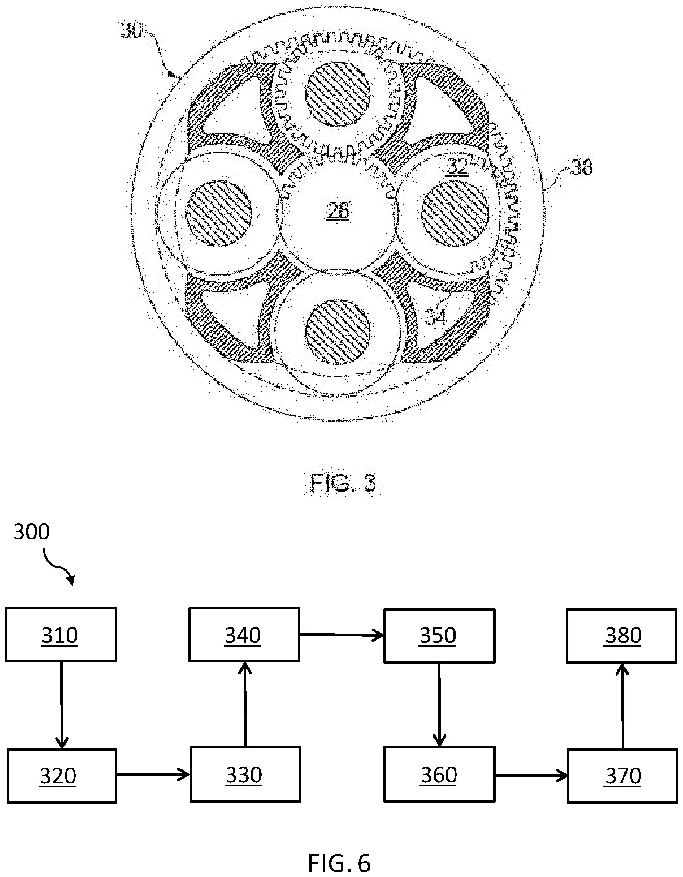

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

*Figure 4*

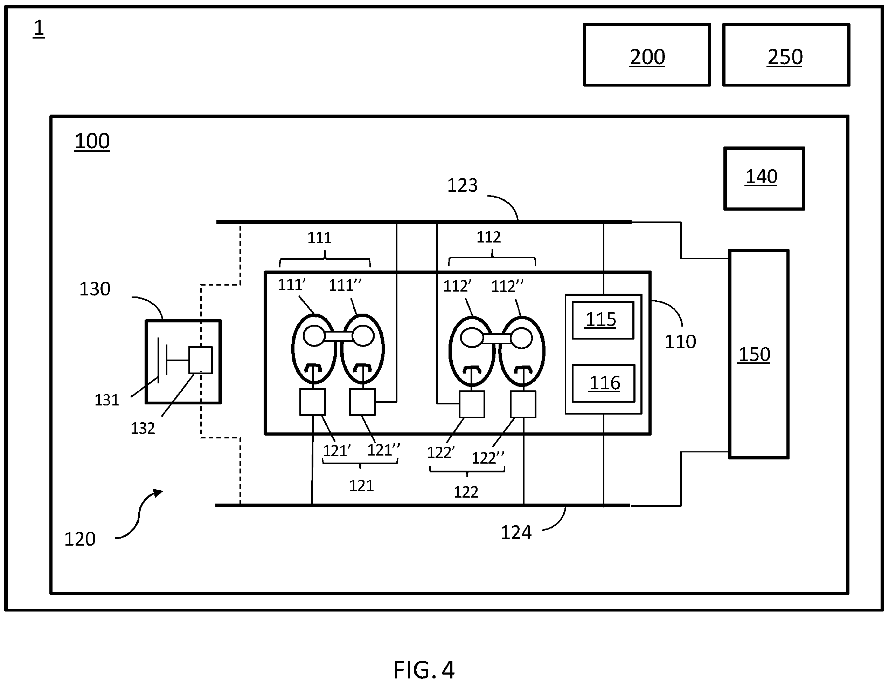

Figure 4 is a schematic illustration of an aircraft 1 which includes a power and propulsion system 100.

The power and propulsion system 100 includes a single propulsive gas turbine engine 110. The engine 110 has two spools: a first spool, which in this case is a low-pressure spool having a low-pressure compressor 14; a low-pressure turbine 19; and an interconnecting shaft 26, and a second spool, which in this case is a high-pressure spool having high-pressure compressor 15; a high-pressure turbine 17; and an interconnecting shaft 27. The engine could alternatively be of the three-spool type and/or could include a gearbox as described above with reference to Figures 1-3. The engine 110 may be of the low- or high-bypass turbofan type or another type, for example the open rotor type.

In this embodiment the propulsive gas turbine engine 110 includes two electric machines 111, 112: a first electric machine 111 mechanically coupled with its first spool and a second electric machine 112 coupled with its second spool. Each of the machines 111, 112 is operable as both a motor and as a generator. Thus, each machine 111, 112 can either drive rotation of its spool to increase its speed, or extract mechanical power from its spool and generate electrical power therefrom.

In a preferred embodiment one or both of the electric machines 111, 112 are coaxially coupled with the shafts of the spools and embedded within the core 11 of the engine 110. The electric machines 111, 112 could, however, be coupled with the spools in another manner, for example through an auxiliary gearbox using a radial/tower shaft arrangement.

In this embodiment each electric machine 111, 112 comprises two sub-machines: the first electric machine 111 comprises a first sub-machine 111' and a second sub-machine 111"; and the second electric machine 112 comprises a first sub-machine 112' and a second sub-machine 112". The term "sub-machine" will be understood to refer to one of a plurality of functionally separate electric machines which are physically integrated together to some extent. For example, the electric machine 111 may be a dual-wound machine having a single, common rotor and a single stator structure featuring two independent sets of field windings, with the two independent sets of windings forming the two sub-machines 111', 111". Alternatively, each of the two sub-machines 111', 111" may have its own stator and its own rotor axially spaced apart from the rotor and stator of the other sub-machine, with some common structure such as a common casing or mounting arrangement. Other sub-machine arrangements will occur to those skilled in the art. The overall power rating of each electric machine is preferably equally or approximately equally split between its two sub-machines, though this need not necessarily be the case: a split of 40-60% and 60-40% could be used, for example.

Each electric machine 111, 112 can be of any suitable type known in the art. In a preferred embodiment each machine 111, 112 is of the permanent magnet type, but induction or switched-reluctance machines could also be used, for example. The machines 111, 112 are preferably of the radial flux or transverse flux type, but other arrangements could be used.

The power and propulsion system 100 further includes an electrical system 120. The electrical system 120 includes one or more electrical distribution busses 123, 124 which are electrically connected with the electric machines 111, 112 of the engine 110. In this way, electrical power can be received from, delivered to and transferred between the electric machines 111, 112.

In the illustrated embodiment the electrical system 120 is a dc electrical system with one or more dc electrical distribution busses 123, 124 which interface with the electric machines 111, 112 through ac-dc power electronics converters 121, 122. The use of a dc electrical system allows a single bus to simultaneously receive electrical power from electric machines driven to rotate at different speeds, allowing for what may be referred to as 'dual spool power generation'. This means that significant amounts of electrical power can be generated from one engine 110 even at low-power engine operating points. Additionally or alternatively, the ability to simultaneously generate power from two spools of the same engine may reduce the impact on the engine operating point and/or peak turbine temperatures. This allows the engine surge margin to be maintained whilst a relatively large amount of electrical power is generated to, for example, simultaneously charge an energy storage system 130 and power engine and platform electrical loads 115, 116, 150.

Each electric machine 111, 112 is connected with the dc electrical system 120 via a set of one or more bidirectional ac-dc converters. Specifically, the first electric machine 111 has a first set of bidirectional ac-dc converters 121, including a first converter 121' for its first sub-machine 111' and a second converter 121" for its second sub-machine 111". Likewise, the second electric machine 112 has a second set of bidirectional ac-dc converters 122, including a third converter 122' for its first sub-machine 112' and a fourth converter 122" for its second sub-machine 112". Any suitable ac-dc converter topology may be used, for example H-bridges accompanied by appropriate filters.

In the illustrated embodiment, the dc-sides of the ac-dc converters 121, 122 are connected with the dc busses 123, 124 so as to provide reconfigurability and fault tolerance, in addition to simultaneous dual-spool power generation. Specifically, since each electric machine 111, 112 comprises two sub-machines, each electric machine can be connected with each of the two busses 123, 124. The first sub-machine 111' of the first electric machine 111 is connectable with the first dc bus 123, the second sub-machine 111" of the first electric machine 111 can be connected with the second dc bus 124, the first sub-machine 112' of the second electric machine 111 can be connected with the first dc bus 123, and the second sub-machine 112" of the second electric machine 112 can be connected with the second dc bus 124.

Through the electrical system 120, the power and propulsion system 100 provides electrical power to various electrical loads distributed about the engine 110 and the aircraft platform 1. Platform electrical loads 150 may include, for example, one or more of: lighting, cabin environmental control systems such as heating systems, wing anti-icing systems, various actuators and the like. Engine electrical loads 116 may include, for example, one or more of: an electric nacelle anti-icing system, an electrically-powered oil pump, or an electric cabin blower system.

In accordance with the present invention, one of the engine electrical loads is an electrically-powered fuel pump 115 which delivers fuel to the combustion equipment 16 of the engine 110. It will be understood that the electrically-powered fuel pump 115 receives its electrical power through the electrical system 120, and in particular from the one or more dc distribution busses 123, 124. Thus, the fuel pump 115 is powered as long as there is electrical power available on the one or more busses 123, 124. This is in contrast to fuel pumps of conventional gas turbine engines in which the fuel pump(s) are powered as long as the spools of the gas turbine are rotating. For example, a fuel pump is conventionally either mechanically driven by a spool of the engine (e.g. through an accessory gearbox (AGB)) or powered by the output of a dedicated variator arrangement which has mechanical power from a spool of the engine as one if its inputs (e.g. through an AGB). Utilizing an electrically-powered fuel pump 115, however, allows for a reduction in weight and mechanical losses due to a reduction in mechanical parts, and may allow faster and more precise control over the delivery of fuel to the combustion equipment 16.

The power and propulsion system 100 further includes an energy storage system (ESS) 130. In preferred embodiments the ESS 130 takes the form of a rechargeable battery pack or module 131, formed from lithium-ion cells or cells of another suitable type. As illustrated by the dashed lines, the ESS is connected with the electrical system 120, possibly via a dc-dc power electronics converter 132 for conditioning the power and matching it to voltage of dc electrical system. In this embodiment it can be seen that the ESS is connected with each of the dc distribution busses 123, 124.

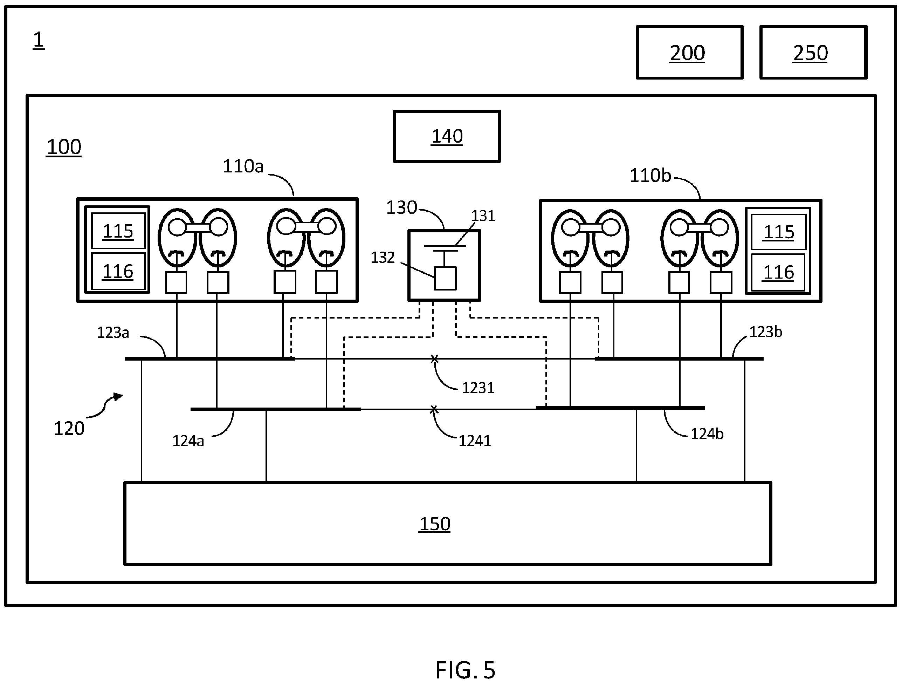

The ESS 130 may be used as an electrical power source or sink for a variety of different purposes. For example, the ESS 130 may provide power to, or sink power from, the spool-coupled electric machines 111, 112 in order to manage the surge margin of engine, especially during engine transients such as accelerations and decelerations. The ESS 130 may also be used to power one or more of the electric machines 111, 112 as part of an electric start procedure. In accordance with the present invention, the ESS 130 provides power to the electrically-powered fuel pump 115 during an engine restart attempt. This is described in more detail with reference to Figure 5.

The aircraft 1 may further include an Auxiliary Power Unit (APU) 200. In some embodiments, one or more electric machines (not shown) driven by the APU 200 are used as an electrical power source to replace or supplement the power provided by the ESS 130 during an electric start of the engine 110. In other embodiments, however, the APU 200 may not be used for this purpose, or may be entirely omitted from the aircraft 1 to reduce weight. In some instances, for example where the ESS 120 is insufficiently charged and the APU is omitted or unable to provide power, a ground cart may be used to provide electrical power to start the engine 110.

An APU 200 is generally not capable of being started during flight. Thus, the aircraft may also further include a Ram Air Turbine (RAT) 250 or other emergency source of electrical power. In case of a loss of electrical power, the RAT 250 may be deployed, for example to charge the ESS 130 to allow an inflight restart attempt. In preferred embodiments, however, the RAT 250 may be omitted entirely to reduce aircraft weight, with the ESS 130 providing sufficient engine restart capability. In some embodiments a portion of the ESS 130 may be dedicated to providing electrical power during restart attempts so that the capability is always available. Additionally or alternatively a state of charge of the ESS 130 may be maintained above a threshold level so that the capability is always available.

The power and propulsion system 100 further includes a control system 140. The control system 140, which can take any suitable form including a FADEC and may include one or more controllers and/or one or more functional modules, provides control of the engine 110, including the fuel pump 115 and the electrical machines 111, 112; and the electrical system 120, including the ESS 130 and the power electronics 121, 122, 132. The control system 140 may, amongst other things, control: the configuration of the electrical system 120; the modes in which the electric machines 111, 112 of the engine 110 operate; the delivery of fuel into the combustion equipment 16 of the engine 110; the mode of operation of the ESS 130, the APU 200 and/or the RAT 250; and parameters of the power electronics (e.g. switching frequencies and duty cycles of the semiconductor switches). An inflight restart procedure, at least partially performed under the control of the control system 140, is described below with reference to Figure 6.

*Figure 5*

Figure 5 is a schematic illustration of an aircraft 1 with a multi-engine power and propulsion system 100. The system 100 is the same as that of Figure 4, except that it includes two engines 110a, 110b instead of one.

In the illustrated embodiment, the dc busses 123a, 124a associated with the first engine 110a are electrically connected with the dc busses 123b, 124b associated with the second engine 110b, optionally via selectively openable and closable bus ties 1231, 1241. This allows electrical power generated by the electric machines 111, 112 of one engine (e.g. engine 110a) to be transferred to the other engine (e.g. engine 110b). As well as generally increasing fault tolerance in the power generation system, the ability to transfer power from one engine 110a to another 110b provides cover in the event that the ESS 130 cannot power the fuel pump 115 of an engine 110b following a flameout. Powering the fuel pump 115 of the shutdown engine 110b using the ESS 130 may still be preferred, however, particularly as it can allow for a catch on the fly restart attempt.

Compared with existing aircraft power and propulsion systems, the power and propulsion systems 100 of the present disclosure (including both the single engine embodiment of Figure 4 and the multi-engine embodiment of Figure 5) may have electric machines 111, 112 sized and designed so that a much greater amount of electrical power can be generated from the engine spools. Combined with dual spool power generation, this means various functions such as the simultaneous management of engine surge margin and charging of the ESS 130 are possible over a wide range of engine operating points.

Table 1 illustrates exemplary peak powers for the first machine 111 (coupled with the first spool, which may be a low-pressure or intermediate-pressure spool) and the second electric machine 112 (coupled with the second spool, which may be a high-pressure spool). The values are expressed as ratios, the divider being the peak engine thrust. For the avoidance of doubt, the 'peak thrust' is the peak dry thrust, which refers to the peak thrust without the use of any afterburner or reheat.

**Table 1**

|  | Max. Power Rating / Max. Engine Thrust (WN$^{-1}$) | | |
| --- | --- | --- | --- |
|  | Example 1 | Example 2 | Example 3 |
| Electric Machine 1 | 2.2 | 3.1 | 4.5 |
| Electric Machine 2 | 3.8 | 6.4 | 8.0 |
| Total | 6.0 | 9.5 | 12.5 |

For both the electric machine power and the engine thrust, the term 'peak' will be readily understood by those skilled in the art to refer to the 'rated' values, i.e. the maximum values for which the electric machine or engine are designed to operate in without causing damage to the components. As explained above, each electric machine 111, 112 may include multiple sub-machines 111', 111", 112', 112". In this case, the peak power an electric machine (e.g. electric machine 111) is the sum of the peak powers of each of its sub-machines 111', 111".

Table 2 illustrates exemplary maximum values of the fraction of the power extracted from the spools of an engine (e.g. 110, 110a) by its electric machines during flight. In other words, the maximum value of the following percentage to occur during a flight of the aircraft 1:

$$\text{Percentage} = \frac{Electrical\ Power\ Generated\ from\ Spools}{Total\ Spool\ Power} \times 100\%$$

**Table 2**

|  | Example 1 | Example 2 | Example 3 |
| --- | --- | --- | --- |
| Electrical Power Extracted (kW) | 570 | 720 | 920 |
| Total Engine Spool Power (LP + HP, MW) | 5.5 | 9.0 | 16.0 |
| Ratio | 10.4% | 8.0% | 5.8% |

It will be appreciated that whilst the above relates to a two-spool engine, the same percentage can be calculated for a three-spool engine. Furthermore, it will be appreciated that the absolute values of the spool power and electrical power generation are platform-dependent and will increase or decrease depending on the size of the platform and its engines.

Compared with existing aircraft power and propulsion systems, the ESS 130 of the power and propulsion system 100 of the present disclosure may be sized and designed so as to provide a greater amount of electrical power relative to the size of the platform 1. Table 3 illustrates exemplary ESS energy storage capacities as well peak power and propulsion system thrusts (i.e. the sum of the peak thrusts of all of the propulsive engines of the platform). A ratio, defined as the total energy storage capacity divided by the maximum rated thrust of the power and propulsion system is also provided.

**Table 3**

|  | Single Engine | Twin Engine | |
| --- | --- | --- | --- |
|  | Example 1 | Example 2 | Example 3 |
| **Energy Storage Capacity (kWh)** | 15 | 25 | 240 |
| **Peak Platform Thrust (kN)** | 50 | 100 | 600 |
| **Ratio (WhN$^{-1}$)** | 0.30 | 0.25 | 0.40 |

Various modifications and alternatives to the specific embodiments illustrated in Figures 4 and 5 will occur to those skilled in the art. For example:

i. Although only single-engine and twin-engine platforms are illustrated, an aircraft could have more than two (e.g. four) propulsive gas turbine engines.

ii. In the illustrated embodiments, the full power of each electric machine 111, 112 is split between two sub-machines 111', 111"; 112', 112". This need not be the case: each electric machine 111, 112 may be a single, larger electric machine of the full power rating. This may however reduce the fault-tolerance of the platform, and in particular may prevent cross-engine electric starting and restarting in the presence of one or more faults, for example a non-critical fault resulting in a partial or full loss of one or more of the electric machines.

iii. In principle each electric machine 111, 112 could have more than two (e.g. three or four) sub-machines, but the number will in practice be limited by space constraints.

iv. Whilst dual spool power generation is preferred, only one of the spools of the engine 110 may be provided with an electric machine in other embodiments. In other words, one of electric machine 111 and electric machine 112 may be omitted.

v. Whilst the illustrated embodiment has two dc busses 123, 124 per engine 110, fewer than two (i.e. one) or more than two dc busses could be provided. The use of a single bus would reduce fault tolerance compared with two busses. The use of more than two busses could increase fault tolerance but at the cost of increased system weight and complexity.

vi. Whilst a battery is illustrated, the ESS 130 could take another form. It could, for example, additionally or alternatively include one or more supercapacitors. One or more fuel cells could also be used, though batteries are preferred.

*Figure 6*

Figure 6 is a flow chart illustrating an inflight electric restart procedure 300 in which a propulsive gas turbine 110 is restarted following a planned or unplanned shutdown. The procedure may be initiated automatically or by a pilot of the aircraft 1, and may be performed under the control of a control system, for example the control system 140 of the power and propulsion system 100 of Figure 4 or 5.

At 310, the aircraft 1 is in flight and its gas turbine engine 110 is operating normally. One or both of the electric machines 111, 112 of the engine 110 are being operated in the generator mode of operation so that electrical power is being supplied to the electrical system 120.

At 320, electrical power generated by the electric machine(s) 111, 112 in step 310 is supplied from the electrical system 120 to the electrically-powered fuel pump 115. The fuel pump 115 thus supplies fuel to the combustion equipment 116 of the engine 110.

Optionally, at 330, electrical power generated by the electric machine(s) 111, 112 is supplied to the ESS 130 so as to maintain the state of charge of the ESS 130 above a predetermined threshold. The predetermined threshold is a state of charge sufficient to supply the electric fuel pump 115 for the duration of at least one engine restart attempt. In other embodiments step 330 may be omitted, for example if the ESS 130 is already fully charged, or if a portion of the ESS 130 is dedicated to powering essential electrical loads such as the fuel pump 115 during restart attempts and used for no other purposes.

At 340, a determination is made that a flame in the combustion equipment 16 of the gas turbine engine 110 has been extinguished. In other embodiments step 340 may not occur, for example if the engine 110 is intentionally shut down. The determination that the flame in the combustion equipment 16 of the gas turbine engine 110 has been extinguished may be made in any suitable manner, and various ways will occur to those skilled in the art. Examples include: a drop in temperature in the combustion equipment 16 or in one or more of the turbine sections 17, 19; a drop in pressure in one or more of the compressor sections 14, 15; a drop in a speed of rotation of one or more of the spools; or a drop in the rotor torque of one or more of the electric machines 111, 112 of the gas turbine engine 110. Any of these parameters may be sensed or derived, as is known in the art.

Steps 350-360 are optional and will be discussed in more detail below.

Moving to step 370, electrical power is supplied from the ESS 130 to the electrically-powered fuel pump 115 so that the fuel pump can deliver fuel to the combustion equipment 16 of the engine 110. The control system 140 may control the electrical system 120 and its ESS 130 so that it delivers the electrical power as soon as possible (e.g. almost instantly) after determination of the flameout event. For example, the control system 140 may be configured to control the ESS 130 so that it supplies the electrical power to the fuel pump 115 within 5 seconds, or even within 3 seconds, of the determination that the flame in the combustion equipment has been extinguished.

At step 380, the gas turbine engine 110 is restarted by lighting its combustion equipment. The details of this are beyond the scope of the present disclosure, but will be familiar to those skilled in the art. In brief, the control system 140 will control the delivery of fuel into the combustor of the engine and ignite the fuel when a suitable fuel-to-air mixture is obtained.

It will be appreciated that following the extinguishment of the flame in the combustion equipment 16, the electric machines 111, 112 are no longer able to supply the electrical system 120 with electrical power. Although the spools 14, 19, 26; 15, 17, 27 will continue to rotate, extracting power from them to supply the fuel pump 115 would slow the spools down and may move the gas turbine engine 110 outside of its windmill restart envelope. Thus, by instead supplying the fuel pump 115 using the ESS 130, the spools are not slowed down and a windmill restart may be achieved with relatively little power expenditure. Furthermore, since the ESS 130 can supply the electrical system 120 with power almost instantaneously, a restart attempt can occur almost instantaneously, before the spools have time to significantly slow down. Thus, a 'catch on the fly' engine restart may be achieved, which minimizes the disruption to flight and minimizes the fuel burn and electrical power usage associated with the engine restart.

Returning to optional step 350, in response to the determination at step 340, prior to step 370, one or more of the electric machines 111, 112 may be operated in the generator mode so as to extract mechanical power from one or more of the spools 14, 19, 26; 15, 17, 27 and generate electrical power therefrom. This generated electrical power may be supplied to the ESS 130 to charge it, for example if the state of charge of the ESS 130 is below the threshold referred in step 330. Additionally or alternatively, the electrical power generated in step 350 may be supplied to one or more other electrical loads 116, 150.

As noted above, extracting power from the engine spools 14, 19, 26; 15, 17, 27 following extinguishment of the combustor flame may not be preferable because it may move the gas turbine engine 110 outside of its windmill restart envelope. This could harm the restart attempt. In other embodiments, however, it may be desirable; for example if it is determined following a flameout event that the ESS 130 lacks sufficient charge to attempt an engine restart. In this case, one or both electric machines 111, 112 may be automatically switched to the generator mode of operation. In such a case it may be necessary to follow step 350 with a manoeuvre, for example a controlled dive, to return the aircraft to its windmill restart envelope.

At optional step 360, electrical power may be supplied from the ESS 130 to one or more of the electric machines 111, 112 so that they drive and increase the speed of rotation of their spool(s) 14, 19, 26; 15, 17, 27. This may be desirable where the ESS 130 has sufficient charge to power the fuel pump 115 during a restarting attempt, but it is determined that the speed of the spools is such that the gas turbine engine 110 is outside of its envelope for restarting. After lighting the combustion equipment 16, the electric machines 111, 112 may continue to motor the one or more spools for some time to increase the spool speed to a level where the engine operation becomes self-sustaining, i.e. when the combustion of fuel and resulting driving of the turbines can drive the compressors without the assistance of the electric machine 111, 112. For example, the combustor 16 may be lit at about 20% engine power, but the machines 111, 112 may continue to motor the spools until about 40% power. With a 'catch on the fly' restart, the engine power may be above the threshold (e.g. 40% engine power) for self-sustaining operation immediately after lighting the combustion equipment 16, in which case no further motoring may be required.

Thus, a procedure 300 for restarting a propulsive gas turbine engine 100 of an aircraft 1 is provided. The procedure may be of particular utility in a single-engine aircraft and/or an aircraft without an emergency power generation system such as a RAT 250. By utilizing the combination of an ESS 130 and an electrically-powered fuel pump 115, it may be possible to quickly restart the engine 110 in a 'catch on the fly' manner. Furthermore, such a restart attempt may always be available by either providing a portion of the ESS 130 dedicated to powering essential loads during restart attempts and/or maintaining a state of charge of an ESS 130 above a threshold level during normal flight.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein. The scope of protection is defined in the appended claims.

**Claims**

1. An aircraft power and propulsion system (100) comprising:

    a propulsive gas turbine engine (110) comprising a plurality of spools (14, 19, 26; 15, 17, 27), combustion equipment (16), one or more electric machines (111, 112) mechanically coupled with one or more of the spools, and an electrically powered fuel pump (115) for delivering fuel to the combustion equipment;
    an electrical system (120) connected with the one or more electric machines (111, 112) and the electrically powered fuel pump (115), the electrical system comprising an energy storage system (130); and
    a control system (140) configured to:
    responsive to a determination to the effect that a flame in the combustion equipment (16) has been extinguished, control the electrical system (120) to supply electrical power from the energy storage system (130) to the fuel pump (115) during an engine restart attempt.

2. The aircraft power and propulsion system (100) of claim 1, in which a portion of the energy storage system (130) is dedicated to providing power to one or more electrical loads including the electrically powered fuel pump (115) during engine restart attempts.

3. The aircraft power and propulsion system (100) of claim 1 or claim 2, in which the control system (140) is further configured to maintain a state of charge of the energy storage system (130) above a predetermined level, wherein the predetermined level is sufficient for the energy storage system to power the electrically powered fuel pump (115) for at least one engine restart attempt.

4. The aircraft power and propulsion system (100) of any one of the preceding claims, in which the control system (140) is further configured, responsive to the determination to the effect that the flame in the combustion equipment (16) of the gas turbine engine (110) has been extinguished, to control the electrical system (120) to:
   supply electrical power from the energy storage system (130) to one or more of the electric machines (111, 112) and to operate said one or more of the electric machines as motors to drive rotation of and increase a speed of one or more of the spools (14, 19, 26; 15, 17, 27) of the gas turbine engine (110) during the restart attempt.

5. The aircraft power and propulsion system (100) of claim 4, in which the control system (140) is further configured to maintain a state of charge of the energy storage system (130) above a predetermined level, wherein the predetermined level is sufficient to power both the electrically powered fuel pump (115) and the one or more electric machines (111, 112) operated as motors for at least one engine restart attempt.

6. The aircraft power and propulsion system (100) of claim 3 or claim 5, in which the predetermined level is sufficient for a plurality of engine restart attempts.

7. The aircraft power and propulsion system (100) of any one of the preceding claims, in which the control system (140) is further configured, responsive to the determination to the effect that the flame in the combustion equipment (16) of the gas turbine engine (110) has been extinguished, to:
   prior to the engine restart attempt, operate one or more of the electric machines (111, 112) as generators to extract mechanical power and generate electrical power from one or more of the spools (14, 19, 26; 15, 17, 27), and to deliver at least a portion of the generated electrical power to charge the energy storage system (130) and/or to power one or more electrical loads (116, 150).

8.  The aircraft power and propulsion system (100) of any one of the preceding claims in which:

    the propulsive gas turbine engine (110) comprises a first spool (14, 19, 26) and a second spool (15, 17, 27); and
    the electrical system (120) comprises an electric machine (111) mechanically coupled with the first spool (14, 19, 26) and an electric machine (15, 17, 27) mechanically coupled with the second spool (15, 17, 27).

9.  The aircraft power and propulsion system (100) of any one of the preceding claims in which a ratio defined as:

    - a combined rated power of all of the one or more electrical machines (111, 112) mechanically coupled with the spools (14, 19, 26; 15, 17, 27) of the gas turbine engine (110),

    divided by

    - the maximum rated thrust of the gas turbine engine (110),

    is greater than or equal to 4.5 $WN^{-1}$.

10. The aircraft power and propulsion system (100) of any one of the preceding claims, having only one propulsive gas turbine engine (110).

11. The aircraft power and propulsion system (100) of any one of claims 1 to 9, further comprising a second propulsive gas turbine engine (110b) comprising a plurality of spools (14, 19, 26; 15, 17, 27), combustion equipment (16), one or more electric machines (111, 112) mechanically coupled with one or more of the plurality of spools (14, 19, 26; 15, 17, 27), and an electrically-powered fuel pump (115) for delivering fuel to the combustion equipment, wherein connected with the one or more electric machines (111, 112) and the electrically-powered fuel pump (115) of the second engine (110b).

12. An aircraft (1) comprising the aircraft power and propulsion system (100) of any one of the preceding claims.

13. A control system (140) comprising one or more controllers for controlling an aircraft power and propulsion system including a propulsive gas turbine engine, the control system configured to:
    responsive to a determination to the effect that a flame in combustion equipment (16) of the gas turbine engine has been extinguished, control an electrical system (120) comprising an energy storage system (130) to supply electrical power from the energy storage system (130) to an electrically powered fuel pump (115) during an engine restart attempt.

14. A method (300) of restarting a propulsive gas turbine engine (110) of an aircraft (1) during flight of the aircraft, the method comprising:

    operating (310) one or more electric machines (111, 112) as generators to extract mechanical power and generate electrical power from one or more spools (14, 19, 26; 15, 17, 27) of the gas turbine engine (110);
    supplying (320) the generated electrical power to an electrically powered fuel pump (115), the fuel pump supplying fuel to combustion equipment (16) of the gas turbine engine (110);
    determining (340) a condition to the effect that a flame in the combustion equipment (16) of the gas turbine (110) has been extinguished;
    responsive to determining (340) that a flame in the combustion equipment (16) has been extinguished, supplying (370) electrical power from an energy storage system (130) to the electrically powered fuel pump (115); and
    restarting (380) the gas turbine engine (110) whilst powering the electrically powered fuel pump (115) using electrical power from the energy storage system (130).

15. The method (300) of claim 14 further comprising:
    responsive to determining (340) that the flame in the combustion equipment (16) of the gas turbine engine (110) has been extinguished, supplying (360) electrical power from the energy storage system (130) to one or more electric machines (111, 112) and operating said one or more of the electric machines as motors to drive rotation of and increase a speed of one or more of the spools (14, 19, 26; 15, 17, 27) of the gas turbine engine during the restart attempt.

# Fig.1

# Fig.2

FIG. 3

FIG. 6

FIG. 4

FIG. 5

1

100

250

200

140

130

131

132

115 116

115 116

110b

110a

123b

124b

123a

124a

1231

1241

120

150